Europäisches Patentamt

European Patent Office

Office européen des brevets

(19)

(11) Numéro de publication : **0 025 736**
**B1**

(12) # FASCICULE DE BREVET EUROPÉEN

(45) Date de publication du fascicule du brevet :
03.08.83

(21) Numéro de dépôt : 80401215.1

(22) Date de dépôt : 26.08.80

(51) Int. Cl.³ : **C 03 B 37/025**, C 03 B 37/03,
C 03 B 37/07, G 05 D 15/01

(54) **Procédé de contrôle du tirage d'une fibre optique à partir d'une préforme de verre et système de mise en œuvre d'un tel procédé.**

(30) Priorité : 06.09.79 FR 7922299

(43) Date de publication de la demande :
25.03.81 Bulletin 81/12

(45) Mention de la délivrance du brevet :
03.08.83 Bulletin 83/31

(84) Etats contractants désignés :
DE GB IT NL

(56) Documents cités :
FR A 2 383 137

(73) Titulaire : **THOMSON-CSF**
**173, Boulevard Haussmann**
**F-75379 Paris Cedex 08 (FR)**

(72) Inventeur : **Faure, Michel**
**"THOMSON-CSF" SCPI 173, bld Haussmann**
**F-75360 Paris Cedex 08 (FR)**
Inventeur : **Bricot, Claude**
**"THOMSON-CSF" SCPI 173, bld Haussmann**
**F-75360 Paris Cedex 08 (FR)**
Inventeur : **Robin, Gérard**
**"THOMSON-CSF" SCPI 173, bld Haussmann**
**F-75360 Paris Cedex 08 (FR)**

(74) Mandataire : **Giraud, Pierre et al**
**THOMSON-CSF SCPI 173, Bld Haussmann**
**F-75379 Paris Cedex 08 (FR)**

**Procédé de contrôle du tirage d'une fibre optique à partir d'une préforme de verre et système de mise en œuvre d'un tel procédé**

L'invention se rapporte au tirage d'une fibre de verre, destinée à servir de guide d'ondes optiques, à partir d'une préforme de verre. Elle a pour but de contrôler et de réguler les caractéristiques de la fibre optique.

On sait qu'il est nécessaire de maîtriser un certain nombre de paramètres pour réaliser une fibre de verre capable de servir de guide d'ondes lumineuses, présentant des caractéristiques constantes de transmission optique. Les paramètres principaux de l'opération de fibrage, c'est-à-dire de tirage à partir d'une préforme de verre de diamètre beaucoup plus grand que celui de la fibre, sont les suivants :

— le diamètre de la préforme, lequel doit être aussi uniforme que possible sur la longueur utile de celle-ci ;

— le diamètre de la fibre, paramètre lié à la vitesse de tirage, laquelle est aisément contrôlable en cours de tirage ;

— la température du cône de fibrage, extrémité de la préforme d'où émerge la fibre ; cette température détermine la viscosité du verre, et par combinaison avec la vitesse de tirage, le diamètre de la fibre et celui de la préforme, détermine également l'effort de traction.

Or, cette température est difficile à contrôler de manière exacte : dans le procédé classique de fibrage, la mesure de température du cône de fibrage à l'intérieur d'un four dit de fibrage, est effectuée à l'aide d'un pyromètre optique par visée à travers une fenêtre aménagée dans le four (FR-A-2 383 137). Quelle que soit la précision du pyromètre, la fenêtre de visée introduit une double source d'erreur, car elle crée d'abord une dissymétrie du gradient de température dans le four et ensuite un point de passage critique pour le flux lumineux à mesurer, en raison de la condensation fréquente de matière sur sa paroi transparente et de l'obscurcissement qui en résulte.

L'invention tire parti de la constatation de la dépendance étroite qui existe entre la température du cône de fibrage et l'effort de traction sur la fibre pour une vitesse déterminée d'extraction. Selon l'invention, le contrôle est effectué en réglant la chauffe du four de fibrage de manière à maintenir constant l'effort de traction exercé sur la fibre de verre au point de fibrage, en contrôlant en permanence l'effort de traction qui s'exerce en amont du cône de fibrage sur la préforme de verre. En fait, la mesure de l'effort de traction est effectuée au point de suspension de la préforme de verre et des moyens sont prévus pour compenser l'erreur qui résulte de la diminution du poids de la préforme au cours du tirage.

Le fait de se placer en amont du cône de fibrage évite une erreur qui entacherait une mesure faite en aval, par exemple au niveau du cabestan de tirage de la fibre en raison du frottement créé par l'enrobage ou enduction de la fibre par un matériau de protection mécanique, cet enrobage étant effectué immédiatement à la sortie du four dans la plupart des installations de tirage.

En ce qui concerne l'erreur due à la diminution du poids de la préforme au cours du tirage, on la compense en faisant agir le mécanisme de descente de la préforme dans le four de fibrage sur un dispositif de compensation automatique de cette erreur.

Selon l'invention, le procédé de tirage d'une fibre optique à partir d'une préforme de verre, suspendue à un mécanisme de descente de la préforme, introduite dans un four de fibrage, et soumise à une traction par des moyens de tirage est caractérisé en ce qu'il comporte des moyens pour mesurer l'effort de traction exercé sur la fibre de verre en amont du point de fibrage et en ce que l'on règle la chauffe du four en fonction du résultat de la mesure de l'effort de traction délivré par les moyens de mesure, de sorte que cet effort soit maintenu sensiblement constant.

L'invention sera mieux comprise, et d'autres caractéristiques apparaîtront, au moyen de la description qui suit, en se reportant aux dessins qui l'accompagnent, parmi lesquels :

la figure 1 représente un bâti de tirage utilisant le procédé selon l'invention ;

la figure 2 représente de façon détaillée les moyens électroniques mis en œuvre dans le bâti de la figure 1.

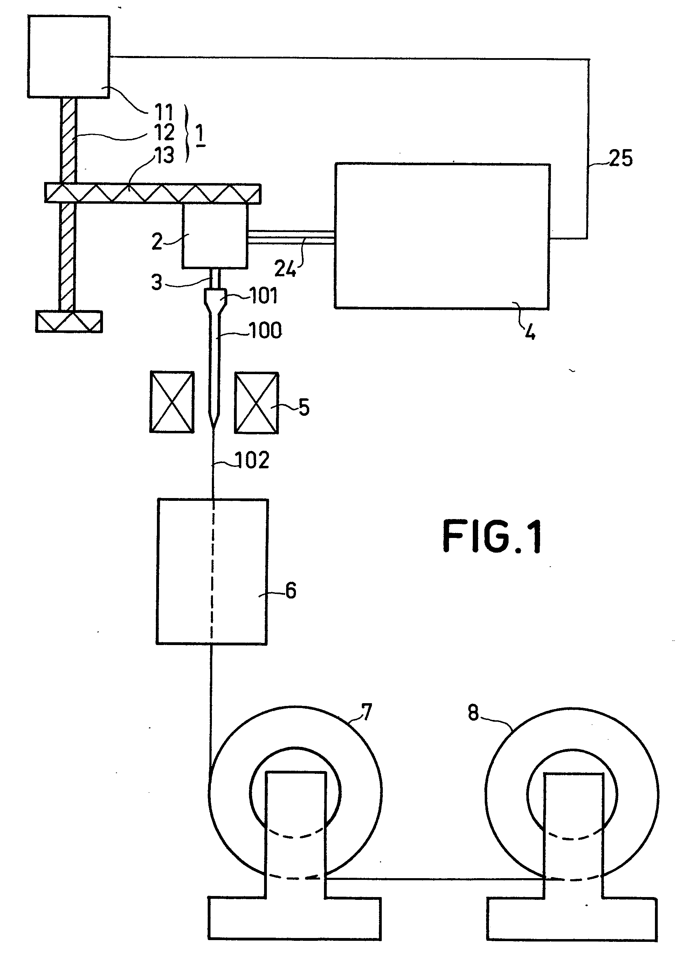

Soit, à titre d'exemple, une installation de tirage (figure 1) comportant :

— un mécanisme 1 de descente de la préforme 100, où l'on trouve un dispositif d'entraînement 11 à axe vertical entraînant en rotation un mandrin fileté 12 traversant par un trou taraudé un support 13 ;

— une jauge 2, du type à résistance variable et à pont de mesure d'impédance, solidaire du support 13 et d'une tige 3 de traction raccordée à la préforme 100 par l'extrémité 101 de cette préforme ;

— une armoire électronique 4 reliée par des câbles 24 et 25 à la jauge 2 et au dispositif d'entraînement 11 ;

— un four de fibrage 5, dans lequel pénètre la préforme 100, et d'où émerge la fibre de verre 102 tirée de la préforme 100 ;

— un dispositif 6 d'enrobage de la fibre de verre comprenant de façon classique un système d'enduction (non représenté de façon distincte) par un produit semi-liquide polymérisable, et par un four de cuisson de l'enrobage (non représenté de façon distincte) ;

— un système d'entraînement 7 par cabestan et moteur électrique ;

— un système de stockage 8 par tambour et moteur d'entraînement synchronisé avec le précédent.

Le fonctionnement de l'installation diffère d'une installation classique sur les points suivants :

— l'absence de mesure de température du cône de fibrage ;

— la mesure de l'effort de traction (par jauge et électronique associée) en éliminant le facteur d'erreur constitué par la variation de poids de la préforme en cours de tirage ; en effet l'effort mesuré au niveau de la jauge est la somme du poids de verre suspendu à la tige 3 et de l'effort de traction exercé sur la fibre 102 au niveau du cône de fibrage, on appellera ci-après « effort corrigé » le résultat obtenu après élimination du poids de verre ;

— la régulation de la chauffe du four 5 en se basant sur la valeur de l'effort corrigé ; éventuellement, la régulation est assurée non par un opérateur chargé de la surveillance, mais par un dispositif d'asservissement commandé par un signal d'erreur élaboré à partir du signal « d'effort corrigé », système classique non représenté.

La jauge, et la partie électronique de l'installation qui lui est reliée, sont conçues de façon à résoudre le problème de la correction de la valeur brute F de l'effort de traction en cours de tirage pour obtenir la valeur f de l'effort corrigé.

On peut voir par un calcul simple que l'équation d'équilibre en cours de tirage, au niveau du point d'amarrage de la préforme sous la jauge, est la suivante :

$$F = P_o \, L/L_o + f \qquad (1)$$

dans laquelle

$F$ = effort de traction brut ;
$P_o$ = poids initial de la préforme ;
$L_o$ = longueur initiale de la préforme ;
$L$ = longueur de la préforme à l'instant de la mesure en cours de tirage ;
$f$ = effort corrigé.

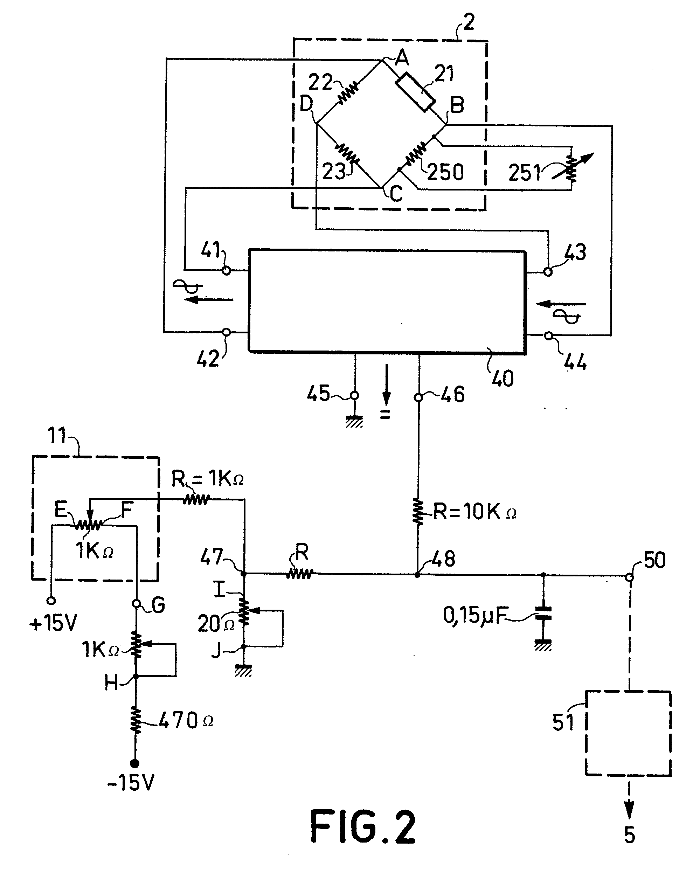

Figure 2, on a représenté la partie électronique de l'installation, y compris les organes électriques qui font partie de la jauge 2.

On trouve dans la jauge 2 un pont de mesure ABCD comportant par exemple dans la branche AB une résistance 21 qui est la résistance caractéristique de jauge, dans les branches AD et DC des résistances fixes 22 et 23 ; dans la branche BC, on trouve une résistance interne fixe 250, d'une part, et d'autre part, en parallèle sur celle-ci, une résistance variable 251 située à l'extérieur de la jauge, en pratique dans l'armoire électronique 4. Cette résistance variable sert à effectuer la mise au zéro du pont de mesure.

Dans l'armoire électronique 4, on trouve un amplificateur classique 40 du type à détection synchrone, comportant, outre un générateur interne de signal de mesure à fréquence prédéterminée (par exemple signal sinusoïdal à 1 kHz) un système interne d'asservissement en phase du signal émis par le générateur et du signal reçu à l'entrée de l'amplificateur proprement dit (non représenté de façon distincte). Un tel système d'asservissement en phase permet d'éliminer les erreurs possibles imputables aux bruits de nature électrique, notamment à 50 Hz.

On a représenté par des bornes 41 et 42 la sortie du signal émis par le générateur interne (non représenté de façon distincte) de l'amplificateur 40 ; les bornes 43 et 44 figurent l'entrée du signal à mesurer et les bornes 45 et 46 la sortie du signal amplifié. Comme il est indiqué figure 2, les bornes 41 et 42 sont reliées aux points A et C d'une première diagonale du pont de mesure, les bornes 43 et 44 étant reliées aux points B et D de la deuxième diagonale du pont.

Du côté de la sortie du signal à utiliser dans le cadre de l'invention, la borne 45 étant par exemple à la masse, la borne 46 est reliée, par deux résistances R (10 kΩ) en série, au point 47 d'un diviseur potentiométrique comprenant deux chemins de réglage en parallèle entre le point 47 et la masse.

Le premier chemin de réglage comporte d'une part un potentiomètre EF(1 kΩ) alimenté en E sous + 15 volts et d'autre part montées en série une résistance potentiométrique GH (max 1 kΩ) et une résistance de 470 Ω reliée au − 15 volts. Le signal de sortie est prélevé au point milieu du potentiomètre EF par l'intermédiaire d'une résistance fixe de 1 kΩ.

Le potentiomètre EF présente la particularité d'être placé dans le dispositif d'entraînement 11 du mécanisme 1 de descente de la préforme, et actionné automatiquement par ce dispositif de façon à réaliser la correction correspondant à l'équation (1).

Le potentiomètre GH est l'organe de réglage du zéro du premier chemin de réglage.

Le deuxième chemin de réglage, manuel, comporte une résistance potentiométrique IJ (maximum 20 ohms) ; elle permet l'ajustement en fonction du diamètre de la préforme.

Le point intermédiaire 48 situé entre les deux résistances R est relié à la borne de sortie 50 du signal d'effort corrigé, borne découplée à la masse, en courant alternatif, par une capacité de 0,15 microfarads.

On a représenté en 51 un voltmètre d'affichage du signal utile, observé par l'opérateur chargé d'effectuer le réglage manuel du four de fibrage.

On peut remplacer le réglage manuel par un système d'asservissement automatique : en ce cas, le dispositif 51 représente un tel système et la flèche correspondante représente la liaison de ce système avec le four de fibrage.

**Revendications**

1. Procédé de tirage d'une fibre optique (102) à partir d'une préforme de verre (100) suspendue à un mécanisme (1) de descente de la préforme, introduite dans un four (5) de fibrage, et soumise à une traction par des moyens de tirage (7) caractérisé en ce qu'il comporte des moyens (2) pour mesurer l'effort de traction exercé sur la fibre de verre en amont du point de fibrage et en ce que l'on règle la chauffe du four (5) en fonction du résultat de la mesure de l'effort de traction délivré par les moyens (2) de mesure, de sorte que cet effort soit maintenu sensiblement constant.

2. Procédé de tirage selon la revendication 1, caractérisé en ce que la mesure de l'effort de traction est effectuée au moyen d'une jauge (2) insérée au point de suspension (3) de la préforme.

3. Procédé de tirage selon la revendication 2, caractérisé en ce que le mécanisme comporte des moyens (11) de compensation de l'effet de la diminution du poids de la préforme sur le résultat de la mesure de l'effort de traction.

4. Procédé de tirage selon la revendication 3, caractérisé en ce que les moyens (11) de compensation comportent un dispositif potentiométrique (E-F) actionné par le mécanisme de descente de la préforme.

5. Système de mise en œuvre du procédé de tirage d'une fibre optique (102) à partir d'une préforme de verre (100) introduite dans un four (5) de fibrage, soumise à une traction par des moyens de tirage (7) et suspendue à un mécanisme (1) de descente de la préforme selon l'une quelconque des revendications 1 à 4, caractérisé en ce qu'il comporte un amplificateur (40) à détection synchrone associé à un pont de mesure (A-B-C-D) d'une jauge (2) où une résistance caractéristique (21) est insérée et un réseau de résistances (R, 470 Ω) et de potentiomètres (E-F, G-H, I-J), recevant le signal utile de l'amplificateur à détection synchrone, ce réseau comprenant un chemin de réglage où est inséré le dispositif potentiométrique (E-F) actionné par le mécanisme (1) de descente de la préforme et délivrant un signal mesurant l'effort de traction sur la fibre de verre dans le four de fibrage.

6. Système de mise en œuvre du procédé selon la revendication 5, caractérisé en ce qu'il comporte un système d'asservissement de la chauffe du four de fibrage au signal mesurant l'effort de traction sur la fibre de verre dans le four de fibrage.

**Claims**

1. A method for drawing an optical fibre (102) out of a blank piece of glass (100) which is suspended on a blank piece dropping mechanism (1), introduced into a drawing furnace (5) and submitted to a traction by drawing means (7), characterized in that it comprises means (2) for measuring the traction force to which the glass fibre is submitted upstream the drawing point, and that the heating power of the furnace (5) is regulated as a function of the result of the traction force measurement delivered by the measuring means (2) in such a way that that force remains substantially constant.

2. A drawing method according to claim 1, characterized in that the traction force measurement is effected by means of a gauge (21) which is inserted at the suspension point (3) of the blank piece.

3. A drawing method according to claim 2, characterized in that the mechanism comprises means (11) for compensating the effect of weight reduction of the blank piece on the result of the traction force measurement.

4. A drawing method according to claim 3, characterized in that the compensation means (11) comprise a potentiometric device (E-F) which is activated by the blank piece dropping mechanism.

5. A system for realizing the method for drawing an optical fibre (102) out of a blank piece of glass (100) which is introduced into a drawing furnace (5), submitted to a traction by drawing means (7) and suspended on a blank piece dropping mechanism (1) according to any one of claims 1 to 4, characterized in that it comprises an amplifier (40) of the synchroneous detection type which is associated to a measuring bridge (A-B-C-D) of a gauge (2) including a characteristic resistor (21), and a resistor (R, 470 Ω) and potentiometer network (E-F, G-H, I-J) which receives the useful signal from the synchroneous detection amplifier and which comprises a regulation path including the potentiometric device (E-F) which device is activated by the blank piece dropping mechanism and delivers a signal measuring the traction force applied on the glass fibre in the drawing furnace.

6. A system for realising the method according to claim 5, characterized in that it comprises a regulation system for the heating power of the drawing furnace according to the signal which measures the traction force applied to the glass fibre in the drawing furnace.

**Ansprüche**

1. Ziehverfahren für eine Lichtleitfaser (102) ausgehend von einem Glasrohling (100), der an einem Absenkmechanismus (1) hängt, in einen Ziehofen (5) eingebracht wird und durch Ziehmittel (7) unter Zugspannung gesetzt wird, dadurch gekennzeichnet, daß es Mittel (2) zur Messung der auf die Faser oberhalb des Faserziehpunkts einwirkenden Zugkraft aufweist und daß man die Heizleistung des Ofens (5) abhängig von dem von den Meßmitteln (2) gelieferten Ergebnis der Zugkraftmessung derart regelt, daß diese Zugkraft im wesentlichen konstant gehalten wird.

2. Ziehverfahren nach Anspruch 1, dadurch gekennzeichnet, daß die Messung der Zugkraft mithilfe einer Meßsonde (21) erfolgt, die am Aufhängepunkt (3) des Rohlings eingefügt ist.

3. Ziehverfahren nach Anspruch 2, dadurch gekennzeichnet, daß der Mechanismus Mittel (11) zur Kompensation der Wirkung der Gewichtsabnahme des Rohlings auf das Ergebnis der Zugkraftmessung besitzt.

4. Ziehverfahren nach Anspruch 3, dadurch gekennzeichnet, daß die Kompensationsmittel (11) eine Potentiometervorrichtung (E-F) aufweisen, die vom Absenkmechanismus des Rohlings betätigt wird.

5. System zur Durchführung des Ziehverfahrens für eine Lichtleitfaser (102) ausgehend von einem Glasrohling (100), der in einen Ziehofen (5) eingebracht, durch Ziehmittel (7) unter Zugspannung gesetzt wird und an einem Absenkmechanismus (1) hängt, gemäß einem beliebigen der Ansprüche 1 bis 4, dadurch gekennzeichnet, daß es einen Verstärker (40) mit synchroner Detektion, der einer Meßbrücke (A-B-C-D) einer Sonde (2) zugeordnet ist, in die ein charakteristischer Widerstand (21) eingefügt ist, sowie ein Netz von Widerständen (R, 470 Ω) und von Potentiometern (E-F, G-H, I-J) aufweist, dem das Nutzsignal des Verstärkers mit synchroner Detektion zugeführt wird, wobei dieses Netz einen Regelstrang aufweist, in den die Potentiometervorrichtung (E-F) eingefügt ist, die vom Absenkmechanismus (1) für den Rohling betätigt wird und ein ein Maß für die auf die Glasfaser im Ziehofen einwirkende Zugkraft bildendes Signal liefert.

6. System zur Durchführung des Verfahrens nach Anspruch 5, dadurch gekennzeichnet, daß es ein Regelsystem für die Heizung des Ziehofens aufgrund des die Zugkraft, der die Glasfaser im Ziehofen ausgesetzt ist, messenden Signals besitzt.

FIG.1

0 025 736

FIG.2